## Europäisches Patentamt

## European Patent Office

## Office européen des brevets

(19)

(11) Veröffentlichungsnummer: **0 144 361**
**B1**

(12) **EUROPÄISCHE PATENTSCHRIFT**

(45) Veröffentlichungstag der Patentschrift:
**17.11.88**

(21) Anmeldenummer: **84901956.7**

(22) Anmeldetag: **28.05.84**

(86) Internationale Anmeldenummer:
**PCT/CH 84/00085**

(87) Internationale Veröffentlichungsnummer:
**WO 84/04864 (06.12.84 Gazette 84/28)**

(51) Int. Cl.⁴: **H 04 N 1/21, H 04 N 1/41**

(54) **VORRICHTUNG UND VERFAHREN ZUM HANDHABEN UND WIEDERAUFFINDEN VON BELEGEN UND DATEN.**

(30) Priorität: **31.05.83 US 499500**

(43) Veröffentlichungstag der Anmeldung:
**19.06.85 Patentblatt 85/25**

(45) Bekanntmachung des Hinweises auf die Patenterteilung:
**17.11.88 Patentblatt 88/46**

(84) Benannte Vertragsstaaten:
**BE CH DE FR GB LI NL SE**

(56) Entgegenhaltungen:
**EP - A - 0 056 948**
**GB - A - 1 487 507**

**Philips Technical Review, Vol. 39, no. 12, 1980, Eindhoven (NL), J.A. de Vos: "Megadoc, a modular szstem for electronic document handling", pages 329-343**
**IBM Journal of Research and Development, Vol.26, no.8, November 1982, Armonk (US), Wong et al.:"Documentz analysis system", pages 647-656**

(73) Patentinhaber: **FROESSL, Horst, Gutenbergstrasse 2-4, D-6944 Hemsbach (DE)**
Patentinhaber: **Durrer, Robert, Dr., Schübelstr. 1, CH-8700 Küsnacht (CH)**

(72) Erfinder: **FROESSL, Horst, Gutenbergstrasse 2-4, D-6944 Hemsbach (DE)**
Erfinder: **Durrer, Robert, Dr., Schübelstr. 1, CH-8700 Küsnacht (CH)**

(74) Vertreter: **EGLI-EUROPEAN PATENT ATTORNEYS, Horneggstrasse 4, CH-8008 Zürich (CH)**

## Beschreibung

Die Erfindung betrifft eine Vorrichtung zum Sammeln von Daten aus einer Anzahl von Quellenbelegen und ein Verfahren zum Eingeben und zur Verarbeitung von Daten mit dieser Vorrichtung.

In vielen, sowohl staatlichen wie auch privaten Organisationen in der Welt stellt die Verarbeitung von Belegen für verschiedene Zwecke ein grosses Problem dar. Die Belege sind hierbei sowohl von momentanen als auch von historischem Interesse und die Belege können Informationen enthalten, die gedruckt oder maschinengeschrieben, von Hand gedruckt oder geschrieben oder Bilder, Zeichnungen oder andere Formen sind, Darstellungsformen die gewöhnlich als Graphiken bezeichnet werden. Sehr oft ist es erforderlich, innerhalb einer kurzen Zeit Zugriff zu ausgewählten Informationen für verschiedene Zwecke zu haben und die Information muss aus einem grossen Volumen solcher Informationen in der Form von Belegen zugänglich sein. Aber nicht jede in den Belegen enthaltene Information ist von Bedeutung: Zudem ist das, was von Interesse ist, von grösserer oder kleinerer Bedeutung, und hängt von den Belegen und der Art der Organisation ab.

Viele Informationen, insbesondere solche von nur historischem Interesse, sind in Form von Mikrofilm, Mikrofiche oder ähnlichen Formen gespeichert, welche durch das, was gewöhnlich als photographische Techniken beschrieben ist, hergestellt werden. In anderen Fällen wird die in den Belegen enthaltene Information in codierte Form umgesetzt, was durch Maschinen, wie z.B. optische Zeichenleser (OCR), erfolgen kann, trotzdem beträchtlichen Aufwand solcher Maschinen, was von der Natur des Druckes oder der Schrift des ursprünglichen Beleges abhängt; andere Informationen müssen in ein System durch Tastatur eingegeben werden, eine Technik, die wegen der unbefriedigenden Art anderer Techniken weite Anwendung gefunden hat, aber trotzdem wesentliche Nachteile wegen der damit verbundenen Fehlerprobleme aufweist, die nur wegen des nochmaligen Eingebens der Information durch den Mensch auftreten. Für eine Beschreibung der verschiedenen Datenverarbeitungsvorrichtungen und -Techniken sei auf «Encyclopedia of Computer Science and Engineering», 2. Auflage, Van Nostrand, Reinhold-Verlag, New York (1983), ab Seite 480, verwiesen. Diese Veröffentlichung enthält die historische Entwicklung der Datenverarbeitung und beschreibt auch den Aufwand und die Schwierigkeit der Rückführung von Informationen in einem System, um die Fehlerquote zu verringern.

In den meisten Fällen ist es weder notwendigerweise wünschenswert, die menschliche Einwirkung auszuschalten noch kann dies praktisch getan werden. Wenn z.B. in eine Organisation kommende Belege verarbeitet und in ein System eingegeben werden, ist es für eine Bedienungsperson notwendig, jedes Dokument zu prüfen, seine Bedeutung zu bestimmen und einige Entscheidungen zu treffen. Es ist deshalb wünschenswert, den menschlichen Vorgang des Umschreibens oder Eintastens der Daten wegen der erwähnten Fehlerprobleme auszuschalten. Andererseits hat die Maschineneingabe z.B. als OCR, in Verbindung mit dem Aufwand den Nachteil, dass oft der gesamte Inhalt jedes Beleges eingegeben werden muss, ein Vorgehen, das Speicherraum verschwendet, die Schwierigkeit des Lokalisierens und Benützens von wichtigen Informationen zu einem späteren Zeitpunkt erschwert und gewöhnlich die nochmalige Verarbeitung der Daten entsprechend ihrer Form und ihrer letzten Verwendung erfordert.

Bei einem bekannten System (Philips Technical Review, Bd. 39 (1980) No. 12, S. 329–343) werden von einem Computer gesteuerte Peripheriegeräte verwendet, mit denen eine Vielzahl von Belegen verarbeitet werden kann. Durch eine Einleseeinheit werden von den Belegen digitalisierte Signale gebildet, welche in einen Plattenspeicher abgespeichert werden. Aus diesem können sie schnell wieder herausgeholt und dann geordnet, aufbereitet, sortiert und verteilt werden. Mit diesem System ist es jedoch nicht möglich, den Umfang des Volumens der Belege zu verkleinern.

Hier setzt die Erfindung ein, der die Aufgabe zugrunde liegt, die eingangs beschriebene Vorrichtung und das Verfahren so zu gestalten, dass unter Vermeidung der Nachteile der bekannten Systeme ein System zur wahlweisen Eingabe des Inhalts von Belegen in einen Speicher vorgesehen wird, aus welchem das Material in ausgewählter Form für verschiedene Zwecke herausgeholt werden kann. Dabei kann gegenseitig auf das gespeicherte Muster und den ursprünglichen Beleg verwiesen werden, wobei die Kombination des Speicherns und der Wechselbeziehung in vielen Fällen ermöglicht, eine weitere Verarbeitung des ursprünglichen Beleges zwischen den organisatorischen Einheiten vollständig auszuschalten. Weiter wird der erforderliche Speicheranteil wegen der Auswählbarkeit der Speichertechnik verringert, wobei die eingesparte Speicherkapazität für das Zuordnen der gespeicherten Daten zu den Quellenbelegen verwendbar ist, wodurch mit diesem Querverweiss eine Bibliographie von Quelleninformation für beispielsweise Berichterstellung vorgesehen werden kann. Weiter können wirkungsvolle Techniken für die Prüfung und Vervollständigung der gespeicherten Daten in einem Codier- und Speicherverfahren vorgesehen werden. Zudem eignet sich ein solches System zur automatischen Auswahl gewünschter Daten von einer grossen Zahl ähnlicher Belege, z.B. gleichen Formates, jedoch mit unterschiedlichem Dateninhalt, durch eine programmierbare Maschine, wodurch die menschliche Einwirkung auf einem höheren Niveau erfolgen kann und zudem wesentlich verringert wird.

Diese Aufgaben werden gemäss der Erfindung durch eine Vorrichtung nach den kennzeichnenden Merkmalen des Patentanspruchs 1 und durch das Verfahren nach den kennzeichnenden Merkmalen des Patentanspruchs 10 gelöst.

Ausführungsbeispiele der Erfindung sind in den Zeichnungen beispielsweise dargestellt und werden anhand derselben nachstehend dargelegt. Es bedeuten:

Fig. 1 ein schematisches Blockdiagramm einer erfindungsgemässen Vorrichtung,

Fig. 2 eine Draufsicht eines typischen Quellenbeleges, in dem die Stellen für das Anbringen einer gedruckten Identifizierung dargestellt sind,

Fig. 3 ein schematisches Blockdiagramm einer zweiten Ausführungsform einer erfindungsgemässen Vorrichtung,

Fig. 4 ein Flussdiagramm, das die Folge der Schritte beim Beleg- und Daten-Verarbeiten gemäss dem erfindungsgemässen Verfahren darstellt, und

Fig. 5 eine Draufsicht einer typischen Textseite, die eine weitere Technik für die Belegbehandlung zeigt.

Um Unklarheiten zu vermeiden, ist es wünschenswert, in der nachfolgenden Beschreibung Begriffe in einer besonderen Weise zu verwenden. In den zu beschreibenden Verfahren beziehen sich der Ausdruck «Digitalisierung» und seine verschiedenen Formen auf die Zerlegung eines Symbols oder Musters in eine Anordnung von hellen und dunklen Elementen, d. h. Elementen mit Kontraständerungen, und auf Signale, die diese Kontraständerungen oder Elemente darstellen. Ein Beispiel würde eine Anordnung von Punkten, welche den Linien eines Buchstabens des Alphabets folgt, so dass er durch einen Punkt-Matrixdrucker erzeugt werden kann, und eine oder mehr Serien elektrischer Signale sein, die entsprechend die hellen und dunklen Stellen der Punkte und ihres Hintergrundes darstellen.

Weiter zu verwendende Begriffe umfassen «Code», d.h. «Maschinen-Code», «Codieren», welche Begriffe sich auf das Formen einer Code-Darstellung eines Symbols beziehen und z.B. den ASC II-Code benützen, so dass der Code ohne weiteres in einer Maschine, in einem magnetischen Medium oder in einer anderen Form von Speicher gespeichert und mit üblichen DP-Techniken gehandhabt werden kann.

In diesem Zusammenhang sei erwähnt, dass das digitalisierte Muster auch gespeichert werden kann, aber die Speicherung weder von der Erkennbarkeit des Symbols abhängt, noch das Symbol tatsächlich erkennbar sein muss. Codieren und Speichern des Codes hängt indessen von der Erkennbarkeit des Symbols als eines von einem definierten Satz und einer Auswahl eines Sortimentes von Code-Elementen ab, die zur Darstellung dieses Symbols (oder dieser Gruppe von Symbolen) zugeteilt wurden. Weiter wird hier die spezifische Auswahl des Code-Types weitgehend ausser Betracht gelassen, weil diese Auswahl in erster Linie vom Zusammenhang abhängt, in welchem die Erfindung benützt wird.

Der Ausdruck «Daten» wird in einem eher allgemeinen Sinn benützt und umfasst Informationen sowohl in menschenlesbarer als auch in maschinenlesbarer oder maschinengespeicherter Form.

«Zeichen» wird verwendet, um sowohl Alphanumerische Symbole als auch andere Symbole, wie z.B. mathematische Operatoren, zu bezeichnen und schliessen generall jedes Symbol mit einem erkennbaren und definierbaren Sinn zu einer Gruppe ein. Dieser Ausdruck unterscheidet sich von «Graphiken» welcher Zeichnungen, graphische Darstellungen od.dgl. bezeichnet.

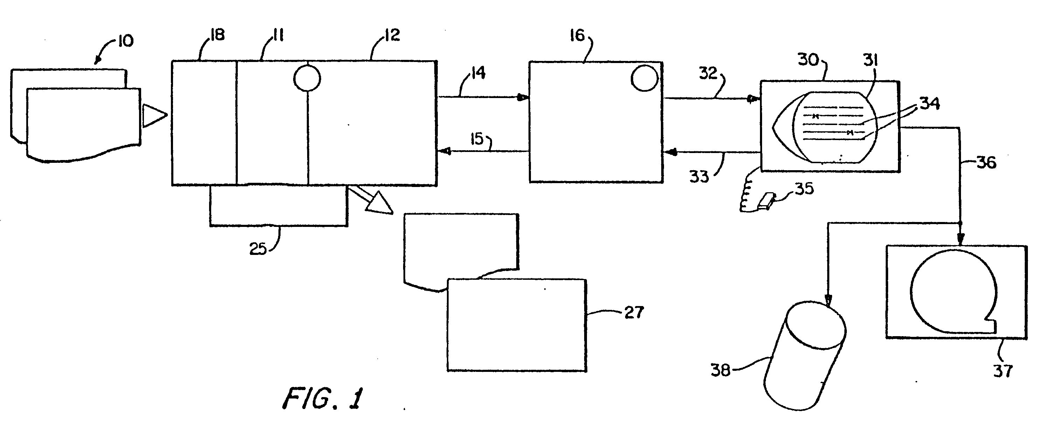

Das Blockdiagramm in Fig. 1 zeigt ein System mit digitaler Datenverarbeitung zur Aufnahme von Quellenbelegen 10, welche in einen Belegleser 11 eingeführt werden, der die optische Abtastung jeder zugeführten Dokumentseite durchführt. Der Leser hat als integralen Teil einen Digitalumsetzer 12, der digitalisierte Signale erzeugt, die typisch für digitale Muster sind, und die Zeichen und Graphiken auf dem Quellenbeleg annähern. Dieser Teil der Vorrichtung ist bekannt und auf dem Markt erhältlich, z.B. der optische Seitenscanner Memorex PS100 OEM der Memorex Corporation, Santa Clara, CA. Die digitalisierten Signale, die typisch für die digitalen Muster der Zeichen und Graphiken auf den Seiten sind, werden über einen Kanal 14 zu einem Speicher 16 geführt, welcher irgendein bekannter Speicher sein kann, der Signale annehmen und sie in einer abrufbaren und auswechselbaren Form zurückhält. Verschiedene Formen von Speichern mit hoher Dichte sind hierzu verwendbar, z.B. Magnet- und Bildplatten, Floppy Disk und Blasenspeicher.

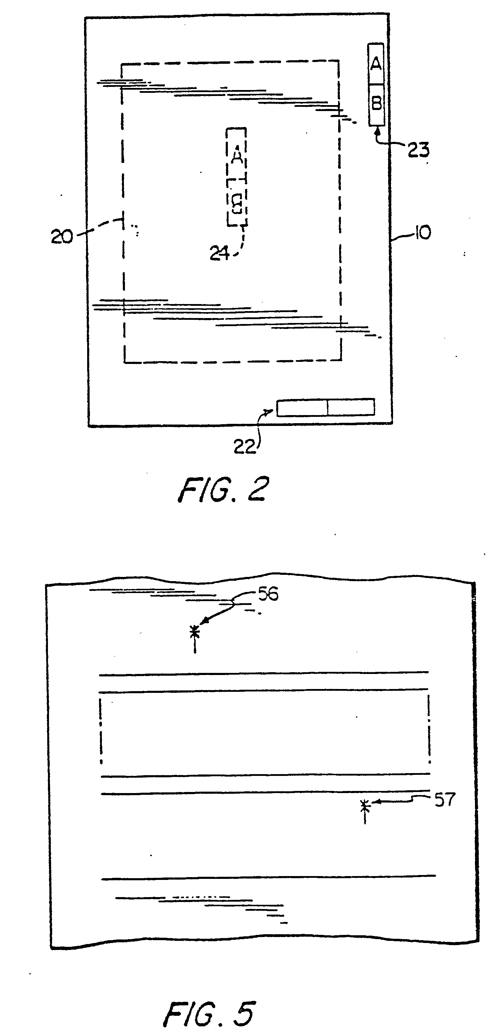

Wesentlich ist die Anordnung eines Druckers 18, der am Eingangende des Gerätes und vorzugsweise in einem Teil der Vorrichtung ganz am Anfang angeordnet ist, obwohl er nicht das erste Element in mechanischem Sinne sein muss. Das selbstätige Drucken kann auch vor der Eingabe der Dokumente für die digitale Umsetzung in einem separaten Schritt vorgenommen werden. Ein geeigneter Drucker ist beispielsweise der Centronics Model 154 der Centronics Data Computer Corp., Hudson, NH. Zweck des Druckers 18 ist es, auf jedem durch die Vorrichtung durchlaufenden Beleg eine gedruckte Legende vorzusehen, welche den Beleg eindeutig identifiziert und welcher nützliche Informationen enthält, mit welchen der Beleg in organisierter Art gespeichert und auf den nötigenfalls rasch zugegriffen werden kann. Der Drucker kann so angeordnet werden, dass er auf einem gewöhnlich nicht benützten Teil des Beleges druckt und so nicht den darauf befindlichen Text stört. Zum Beispiel zeigt Fig. 2 ein typisches Dokument 10 mit einem Bereich 20, in welchem für eine bestimmte Organisation normalerweise Text erscheint, während die Randpartien gewöhnlich weiss sind. In einer Organisation, die gewöhnlich den Beleg durch Lochen am oberen Rand befestigt, kann die Legende in einer mit 22 bezeichneten Zone am unteren Ende der Seite aufgedruckt werden. Wird der Beleg durch Lochen am linken Rand abgelegt, kann die Legende entweder am oberen Ende oder in der Zone 22 oder in einer Zone 23 aufgedruckt werden. Die Zuführrichtung des Beleges bestimmt, ob ein Serie- oder ein Parallel-Drucker für die genannten Zonen benötigt wird.

In jedem dieser Fälle weist jede Zone einen Teil A und einen Teil B auf, von denen der eine Teil mit einer Folge von menschenlesbaren Symbolen bedruckt ist und eine Ablageinformation angeben, z.B. eine Aktennummer, die für jeden Beleg verschieden ist und der eine Datumsangabe enthält. Werden mehr als eine Vorrichtung nach Fig. 1 verwendet, enthalten die Symbole eine Angabe über die entsprechende Vorrichtung oder zusätzliche Informationen für eine Operation. Der andere Teil enthält im wesentlichen dieselbe Information in einer maschinenlesbaren Form, die Symbole verwendet, die durch praktisch alle OCR-Systeme lesbar sind, so z.B. die grundlegenden mathematischen Operatoren, Perioden u.dgl. Mit der aufgedruckten Legende kann das Dokument leicht manuell oder durch eine maschinelle Sortiervorrichtung lokalisiert werden. Wenn die Vorrichtung mit Belegen verwendet wird, welche häufig auf einer Seite mit Text bedeckt sind, kann der Drucker auch so angeordnet werden, dass die Legende auf der Rückseite aufgedruckt wird, wie dies in 24 dargestellt ist. In diesem Fall weist die Zone ebenfalls die Teile A und B auf.

Das Aufdrucken der Legende, die Kontrolle der Zuführung und weitere Funktionen werden durch eine Kontrolleinheit 25 ausgeführt, welche mit dem Drucker 18, dem Leser 11 und dem Digital-Umsetzer 12 gekoppelt ist. Die Kontrolleinheit 25 kontrolliert nicht nur die normalen Funktionen des Gerätes, z.B. das Vorsehen der herstellerspezifischen Eingangssignale, sondern auch den Drucker 18, ob er die richtige Symbolfolge auf jeder Seite einträgt und mit dem digitalisierten Signal eine Adresse entsprechend der aufgedruckten Legende einführt, so dass das Signal im Kanal 14 zur Speichereinheit 16 nicht nur das digitale Signal, das für die digitalen Muster des auf der Seite im Bereich 20 erscheinenden Materials typisch ist, sondern auch eine Adressinformation enthält, z.B. in den Zonen 22, 23 oder 24. Es ist auch wichtig festzustellen, dass die Vorrichtung die Handhabung jedes Quellenbeleges nur einmal vorsieht, ausgenommen, wenn ungewöhnliche Umstände entstehen. Nachdem der Beleg bedruckt, gelesen und die Information digitalisiert und dem Speicher 16 zugeleitet ist, wird der Beleg einer Ablage 27 zugeführt, aus welchem er gewöhnlich nicht mehr entfernt wird, obwohl er darin weiterhin verfügbar sein kann, falls dies gewünscht wird, was von der Aufgabe der Organisation und der Aufgabe der Belege abhängt. Als eine Ausnahme zu dem «Einmalbehandeln»-Prinzip kann es sein, die Belege durch einen separaten Zuführer und Drucker vor dem Leser durchzuführen, wenn Unterschiede in der Zuführgeschwindigkeit wegen der Wahl bestimmter Drucker oder Leser auftreten.

Es ist wünschenswert, zwischen dem Digitalisierer 12 und dem Speicher 16 eine Zweirichtungsverbindung zu haben, so dass der Speicher auf einem Kanal 15 Informationen dem Digitalisierer zukommen lassen kann betreffs verbleibenden, verfügbaren Speicherraum und auch zwecks «handshake» (Verarbeitung zwischen zwei Stellen bei laufender gegenseitiger Prüfung und Betätigung) und Paritätsfehlerprüfung verwendbar ist.

Mit dem bisher beschriebenen Gerät ist es möglich, eine zentrale Verarbeitungseinheit zur Verfügung zu stellen, in welcher ankommende Belege nur einmal zwecks Lesen- und Digitalumsetzen bearbeitet werden, worauf sie abgelegt oder nach einem vorgewählten Zeitablauf vernichtet werden. Alle Daten jedes Beleges sind in einem Speicher verfügbar, so dass mittels Benützung der Adressinformation später auf sie zugegriffen werden kann, so dass die digitalisierten Signale verwendet werden können, um auf einem Bildschirm die digitalen Muster als angenäherte Daten jedes ursprünglichen Quellenbeleges darzustellen. Die gespeicherten Daten sind gewöhnlich eine Mischung von Maschinen-Code und digitalisierten Mustersignalen.

Es ist auch die Philosophie der Erfindung, die Geräte der beschriebenen Art an einem oder mehreren Stellen innerhalb eines Betriebes oder an einer Stelle mit mehreren Geräten anzuordnen. Dies dient für das Organisieren des Betriebes derart, dass alle ein- und ausgehenden Dokumente erfasst werden, wie der Betrieb dies erfordert. Dies erlaubt auch das Erfassen und unmittelbare Übermitteln von Daten, die an einer oder verschiedenen fernen Stellen benötigt werden. Die Organisationsabteilung eines Betriebes könnte z.B. einen neuen Verfahrensablauf mit Zeichnungen auf die genannte Weise eingeben, wobei auf den neuen Verfahrensablauf basierend auf bekannten Passwörtern ohne Papier, zugegriffen werden könnte, d.h. ein Verfahrensablauf, der eine Verteilung zu verschiedenen Organisationseinheiten erfordert. Zudem besteht keine Notwendigkeit, das Papier (d.h. den Verfahrensablauf) für den späteren Zugriff abzulegen. Der gleiche Verfahrensablauf könnte zwecks Änderungskontrolle in einer technischen Abteilung angewandt werden, wo entweder auf die letzte Änderung einer Zeichnung oder auf ihren Werdegang zugegriffen werden oder diese eingelesen werden könnte. Diese Vorgehensweise erfordert ein neues Organisationselement mit geübtem und ausgebildetem Personal.

Fig. 1 zeigt auch ein Gerät zum Abrufen und zur weiteren Verarbeitung der im Speicher 16 gespeicherten Daten. Dieses Gerät weist in verhältnismässig einfacher Form eine Arbeitsstation 30 mit einem symbolisch mit 31 bezeichneten Bildschirm auf, auf welchem Gruppen von digitalen Mustern aus dem Speicher 16 dargestellt werden können. Die Arbeitsstation 30 kann z.B. einen verhältnismässig einfachen Personal Computer mit einem ähnlich einfachen Abrufungsprogramm aufweisen, um Daten vom Speicher 16 auszusortieren und auf dem Bildschirm 31 darzustellen, wobei die Arbeitsstation 30 eine Zweirichtungsverbindung über die Kanäle 32 und 33 mit dem Speicher 16 aufweist. Die Existenz der Arbeitsstation 30 an diesem Punkt der Vorrichtung ist indessen sehr wichtig, wenn man erkennt, dass die gespeicherten Daten im Speicher 16 in digitaler Musterform gespeichert sind und weder sortiert oder ausgewählt noch im Endspeicher sind. Arbeitsstation 30 ist mit einer symbolisch bei 35 dargestellten manuellen Steuerung versehen, welche eine einfache Form eines Positionsanzeigesymbols (Cursor), eine vereinfachte Tastatur, eine «Maus» oder ein Leuchtstift sein können. Diese erlaubt die Anordnung von zwei oder mehr Positionsanzeigesymbole an ausgewählten Stellen in dem auf dem Bildschirm 31 dargestellten textlichen oder graphischen Material. Wenn angenommen wird, dass Linien 34 auf dem Bildschirm 31 Linien von Zeichen darstellen, welche aus dem Speicher 16 aussortiert wurden, kann die Steuerung 35 verwendet werden, um Positionsanzeigesymbole an z.B. Stellen auf den Linien anzuordnen, die durch X-Symbole in Fig. 1 bezeichnet sind. Diese Positionsanzeigesymbole werden verwendet, um die zwischen den X-Symbolen liegenden Elemente als solche zu identifizieren, welche für die weitere Verarbeitung oder den weiteren Gebrauch beibehalten werden.

Die X-Symbole können verwendet werden, um alle Daten, keine Daten oder einen Teil der auf dem Bildschirm dargestellten Daten zu selektieren, wobei die Folge der Eingabe des Materials in den Speicher entsprechend der Aktivierungsfolge der Positionsanzeigesymbole ist. Die ausgewählten Datensegmente werden dann über die Leitung 36 zu einem Gross-Speicher übertragen, der durch eine Speicherbandeinheit 37 oder einen Plattenspeicher 38 dargestellt ist. Ein Computer, der für diesen Zweck gut geeignet ist, ist der Apple «LISA»-Computer der Apple Computer Inc. (siehe BYTE Magazine, Februar 1983, S. 33ff).

Die Steuerung der Positionsanzeigesymbole und Eingabebefehle können auch verwendet werden, um festzustellen, welche Segmente in digitalisierter Form für die nachfolgende Umwandlung in Maschinen-Code gespeichert und welche Segmente (speziell Graphiken) nur in digitalisierter Form als ein geeigneteres Format als in Maschinen-Code zurückgehalten werden.

Zusätzlich zum Auswählen von Datensegmenten kann die manuelle Steuerung 35 auch verwendet werden, um eine Adresse oder ein Kennwort dem Datensegment beizufügen, um die Art der Sache oder die organisatorische Einheit zu bezeichnen, an welche die Sache gerichtet sein soll, oder beides. In einigen Fällen würde notwendigerweise die Steuerung 35 eine Tastatur sein, um einen grösseren Anteil an Steuerungsmöglichkeiten vorzusehen, aber die jeweilige Grösse ist nicht besonders wesentlich. Es wird vor allem vorgezogen, dass nur bedeutungsvolle Teile in digitaler Musterform für die Speicherung und den nachfolgenden Gebrauch beibehalten werden. Zusätzlich werden die ausgewählten Segmente derart identifiziert, dass sie mit Symbolen versehen werden, die ihnen in der Arbeitsstation 30 beigefügt werden. Es ist offensichtlich erforderlich, dass eine ausgebildete Person die Station 30 bedient, eine Person, die fähig ist, die Bedeutung der dargestellten Information zu prüfen und zu verstehen, und den gewünschten Code beizufügen, indem sie ein Lexikon für diesen Zweck benützt, das durch die Organisation geliefert wird. In einem Unternehmen z.B. kann das Lexikon solche organisatorische Einheiten enthalten wie «Rechnungswesen», «Vertrieb», «Forschung und Entwicklung» u.dgl. Es kann auch Untereinheiten enthalten, welche dazu dienen, die spezifischen Forschungs- und Entwicklungsprojekte oder Gegenstände in dem F&E Bereich zu identifizieren. Die exakte Art der Passwörter ist nicht wesentlich für die Erfindung selbst und variiert von Organisation zu Organisation.

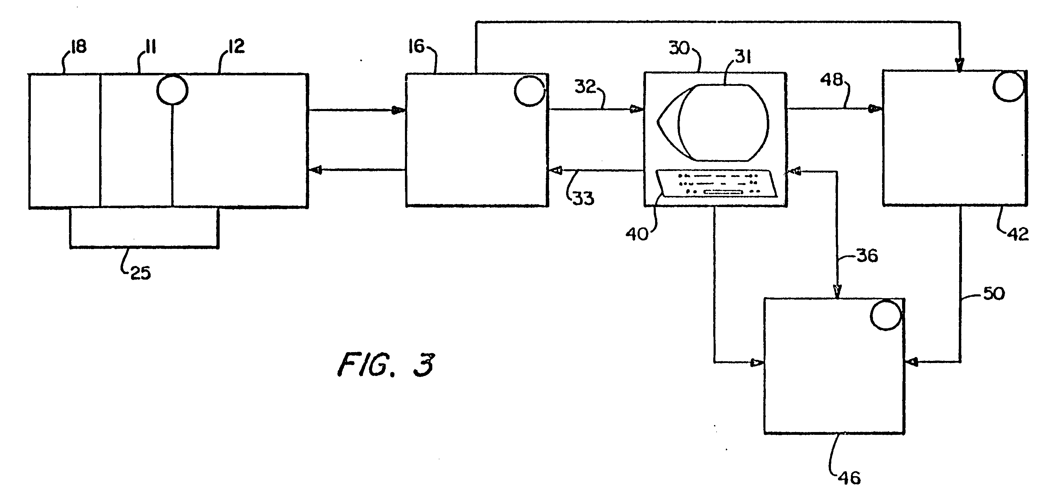

Fig. 3 zeigt eine weitere Ausführungsform der erfindungsgemässen Vorrichtung, in welcher als weiterer Schritt die Umwandlung zu einem Code vollzogen wird. Diejenigen Teile der Vorrichtung, welche bereits beschrieben wurden, werden nicht mehr beschrieben, da ihre Funktionen im wesentlichen dieselben sind. In der Ausführungsform von Fig. 3 hat die Arbeitsstation 30 zusätzlich zum Bildschirm 31 eine vollständigere Tastatur 40, obwohl das Gerät auch einen Lichtstift, eine Maus, einen Steuerknüppel od. dgl. für die Kontrolle der Positionsanzeigesymbole aufweisen kann. Zusätzlich weist das Gerät einen Umwandler/Compiler 42 auf, welcher die digitalisierten Muster darstellenden digitalisierten Signale in Maschinen-Code, z.B. ASCII, BCD oder einen anderen Code, umwandelt. Das Materialvolumen ist an der Arbeitsstation 30 durch die Auswahl der gespeicherten Datensegmente verringert. Zusätzlich zur Speicherung der digitalisierten Signale im Gross-Speicher 46 werden die Signale über einen Kanal 48 dem Umwandler 42 zugeführt, wo sie in einen Code umgewandelt werden, der durch eine bekannte Computer-Vorrichtung verarbeitet werden kann. Die codierten Daten werden dann über einen Kanal 50 einem getrennten Teil des Speichers 46 zugeleitet.

Wie bekannt ist, sind Zeichenerkennungsgeräte guter Qualität fähig, einen grossen Anteil der von ihm angebotenen Muster zu erkennen, welche Muster dann erfolgreich in den Maschinen-Code umgewandelt und gespeichert werden. Es kann indessen erwartet werden, dass gewisse Muster nicht erkannt oder als unbestimmte Symbole erkannt werden, wie z.B. «5» und «S», «H» und «4», u.dgl. Ein unbestimmtes Symbol ist auch ein Zeichen, das eine oder mehrere Umsetzungsversuche durch das Programm erfordert, bis es erfolgreich bestimmt ist. Die digitalen Muster, welche diese unbestimmten und nicht erkennbaren Zeichen darstellen, sind im Speicher 46 gespeichert und der Maschinen-Code für alle erkannten Symbole ist im Speicher 46 gespeichert, aber diejenigen, welche nicht erkannt oder als unbestimmt angesehen werden (Rückweisungen), werden im Speicher versetzt, vorzugsweise in einen separaten Teil desselben, und mit einem ein spezielles Identifiziersymbol bezeichnenden Codezeichen versehen, z.B. ein Rechteck, für das Zeichen, welches das Problem zeigt, mit einer Rückkehradresse.

Nachdem ein Datensatz gespeichert ist, geht das Symbol, das die Zeichen ersetzt hat, welche als nicht erkennbar oder unbestimmt identifiziert wurden, auf den Schirm mit einer gleichzeitigen Darstellung eines digitalen Musters zurück, das im Speicher 46 für das gleiche Zeichen gespeichert ist. Vorzugsweise wird das, das Problemzeichen anzeigende Maschinen-Code-Symbol durch eine bestimmte Anzahl Zeichen entweder in DP-Code oder als digitale Muster auf jeder Seite dieses Symbols, d.h. durch vier oder fünf solcher Zeichen, begleitet, mit denen das unbekannte Zeichen auf dem Bildschirm 31 in einem Zusammenhang dargestellt werden kann, durch den das Muster erkannt werden kann. Auch können die digitalisierten Muster für z. B. vier oder fünf Zeichen auf jeder Seite des Problemzeichens dargestellt werden, um das Zeichen im Zusammenhang anzuordnen. Die Bedienungsperson, die voraussichtlich in der Lage ist, das Symbol zu identifizieren, fügt das entsprechende Symbol in Maschinen-Code unter Benützung der Tastatur 40 ein, ersetzt das Rechteck und ergänzt die im Speicher 46 gespeicherten, umgewandelten Daten.

Wie aus dem vorstehenden hervorgeht, ist die menschliche Intervention nur für das Lösen von Unbestimmtheiten oder ähnlichen Problemen erforderlich, die aus einer unvollständigen Umsetzung entstehen. Diese Intervention könnte auch in einem separaten Schritt erfolgen.

Nach durchgeführter und überprüfter Umwandlung kann der ursprüngliche Datenspeicher entsprechend der Organisationspolitik zurückgehalten oder gelöscht werden. Berücksichtigt man, dass die durch die vorstehend beschriebenen Verschlüsselungen identifizierten Quellenbelege noch verfügbar sind und dass diese Verschlüsselungen die ausgewählten Segmente begleiten, die jetzt von ihren digitalisierten Mustern zu Maschinen-Codes umgesetzt wurden, ist es einfach, falls erforderlich, auf den Quellenbeleg zur Unterstützung für das gewählte Segment zurückzugreifen. So kann das Zurückhalten des digitalisierten Musterspeichers nicht erforderlich sein. Wenn indessen die Quellenbelege graphische Informationen enthalten, die nicht in Maschinen-Code in der gleichen Art umsetzbar sind, ist das Zurückhalten der digitalisierten Mustersignale im Speicher erforderlich.

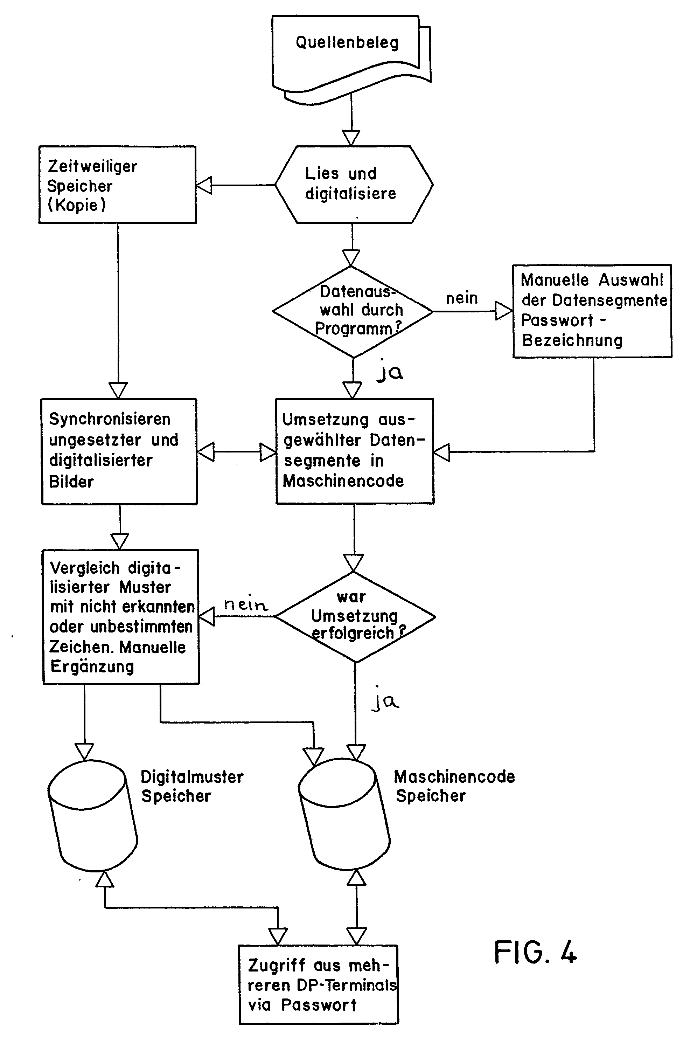

Fig. 4 stellt eine Folge von Ereignissen dar, welche im wesentlichen die gleiche ist, wie die vorstehend beschriebene Folge. Indessen sollte bei der Überprüfung der in Fig. 4 dargestellten Folge erkannt werden, dass mehr als eine Arbeitsstation einbezogen werden kann und auch vorzugsweise einbezogen würde. Auf diese Weise würde die gleiche Arbeitsstation nicht notwendigerweise für die Segmentauswahl und für die Ergänzungen der Maschinen-Code-Umwandlung verwendet. Es ist indessen möglich, mehrere Arbeitsstationen einzusetzen, die jede Aufgabe erfüllen, wenn das im Hinblick auf das Volumen der zu verarbeitenden Belege gerechtfertigt ist.

Nach Fig. 4 werden die Quellenbelege dem Gerät zugeführt, um gelesen, digitalisiert und kopiert zu werden, wobei anschliessend entschieden wird, ob die Datenauswahl durch ein Programm erfolgen kann oder nicht. Wenn die Belege im wesentlichen gleiches Format aufweisen oder andere Charakteristiken aufweisen, welche die automatische Behandlung erlauben, werden die Segmente durch Programme ausgewählt und in Maschinen-Code umgesetzt.

Kann die Segmentauswahl nicht durch Programm erfolgen, werden die Segmente durch manuelle Kontrolltechniken ausgewählt, wie sie vorstehend beschrieben wurden, und die ausgewählten Segmente werden dann umgesetzt.

War die Umsetzung erfolgreich, werden die umgesetzten Daten dem Maschinencode-Speicher eingegeben. Andernfalls werden die unbestimmten oder nicht erkannten Muster mit den digitalisierten Mustern verglichen und die Maschinencode-Daten von Hand ergänzt, worauf die zusätzlichen Codesegmente dem Maschinencode-Speicher eingegeben werden. In jedem Fall werden die digitalisierten Muster gespeichert.

Die gespeicherten Muster und die Maschinen-Codierungen sind dann durch die vorstehend beschriebenen Passwörter verfügbar und können für weitere Bearbeitung verwendet werden.

Ein weiteres Konzept ist in Fig. 5 dargestellt, das die Behandlung der Belege für die Datensegmentauswahl in einem automatischen Sinn umfasst, aber Belege umfasst, die in einem gegebenen Stapel nicht in einem genügend ähnlichen Format vorliegen, um die Auswahl durch programmierte Bereichbestimmung zu erlauben. Fig. 5 stellt einen Teil einer typischen Informationsseite dar, in welcher ein zentraler Teil zum Zurückhalten ausgewählt wird. Das ausgewählte Segment wird durch manuelle Anordnung von Identifizierungsmarkierungen identifiziert, welche unterschiedlich vom Rest des Textes sind, der auf der Seite erscheint, wobei die Markierungen maschinenerkennbar gewählt werden. In dem dargestellten Beispiel sind Markierungen 56, 57 auf der Seite angeordnet worden, die Anfang und Ende des ausgewählten Segmentes bezeichnen. Dementsprechend wird nur der mit den Markierungen bezeichnete Teil zurückgehalten.

Markierungen, wie z. B. in Fig. 5 oder andere einzigartig unterscheidbare Markierungen, welche zwischen Wörtern angeordnet werden, können der Seite durch eine Bedienungsperson mit einem einfachen Markierer, z. B. einem Gummistempel, angefügt werden. Wenn dann die Information gelesen, digital umgesetzt und die Entscheidung darüber getroffen ist, ob die Datenauswahl durch Programm erfolgen kann, ist die Antwort zu dieser letzten Frage «ja», da die Maschine diese Symbole erkennen kann, die auf der Seite eingefügt wurden. Wenn auch dieser erste Vorbereitungsschritt für die automatische Auswahl erforderlich ist, ist die erforderliche Zeit nicht wesentlich grösser als die für die Maschinenauswahl erforderliche Zeit, wie dies in Verbindung mit Fig. 1 beschrieben wurde und der Vorgang benützt keinen Terminal, welcher dann für andere Zwecke verwendbar ist.

Aus den vorstehenden Ausführungen geht hervor, dass die erfindungsgemässe Vorrichtung beim Aussortieren von Daten und Belegen anpassungsfähiger und wirkungsvoller ist. Bei der Behandlung mit Belegstapeln (d.h. eine grosse Beleganzahl mit auf gleichem Format angeordneten Daten) kann die Datenerfassung völlig selbsttätig erfolgen und die Daten können in irgendeiner gewünschten Folge, unabhängig vom Dokumentformat, erfasst werden, wobei die menschliche Mitwirkung bis zu 95% verringert werden kann. Auch muss das Format nicht auf den Belegen markiert werden, d.h. sie benötigen nicht die üblichen «Boxen» und Etiketten. Auch bei der Behandlung von Einzel-Belegen liegt diese Erfassungsflexibilität vor, obwohl eine Bedienungsperson zum Auswählen entweder in der Arbeitsstation 30 (Fig. 1, 3) oder bei einer Vormarkierung (Fig. 5) für automatische Erfassung erforderlich ist. Die Verringerung der menschlichen Mitwirkung ist dann immer noch mehr als 50%.

Umsetzung und Überprüfung in Maschinen-Code, z.B. ASCII, erfolgt durch Benützung wieder zurückholbarer Ebenbilder und es gibt eine fortwährende folgerichtige Zurückhol-Code-Übereinstimmung zwischen dem ursprünglichen Beleg, dem gespeicherten digitalisierten Bild ausgewählter Segmente und dem Maschinen-Code-Speicher. Selbst die nicht erkannten Teile (z.B. Handgeschriebenes), welche ausserhalb der Fähigkeit heutiger OCR-Ausrüstung sind, können in einem gemischten Beleg behandelt werden. Wegen der zweifachen Speicherung können sowohl Dokumente mit Graphiken als auch wichtige Unterschriften gespeichert und zurückgeholt werden; sie können auf wirkungsvolle Weise für die besondere Anwendung gespeichert werden, d.h. mit oder ohne Umwandlung in Maschinen-Code etc.

Das Material kann auch sowohl für unmittelbare Übertragung an eine Organisationseinheit (im Sinne von «elektronischer Post») als auch für nachfolgenden Zugriff durch eine oder mehrere Einheiten bezeichnet werden. Ein Sicherheitsgrad kann, wenn erforderlich, durch begrenzten Zugriff durch bestimmte festgelegte Einheiten vorgesehen werden, wobei dies eine Funktion der zugeteilten Passwörter ist. Der Zugriff zu Belegen von allgemeinem Interesse kann fast unmittelbar jedermann gleichzeitig verfügbar gemacht werden, da der Text eher zugriffbereit sein kann, als die Notwendigkeit, ein Original zirkulieren zu lassen oder zahlreiche Kopien für die Verteilung zu erstellen. Eine Dezentralisation der Organisation hat keine negative Auswirkung auf diese Art der Informationsverfügbarkeit.

**Patentansprüche**

1. Vorrichtung zum Sammeln von Daten aus einer Anzahl Quellenbelegen, bei welcher Mittel zum aufeinanderfolgenden Empfangen von Belegen (10), zum optischen abtasten jedes Beleges (11) und zum Bilden von Serien digitalisierter, für digitale Muster typische Signale (12) vorgesehen sind, welche die Muster auf jedem Beleg weitgehend annähern, mit denen ein Bild jedes Beleges produziert werden kann, gekennzeichnet durch

- Mittel zum Ausdrucken eines Zeichensatzes (18) in einem bestimmten Feld (20) jedes Beleges zum Identifizieren des Beleges und zum Erzeugen elektrischer, für diese Zeichen typischer Signale,
- Speichermittel (16) zum Speichern der Serien digitalisierter Signale mit den für diesen Zeichensatz typischen Signalen,
- Mittel zum Abrufen von Gruppen digitalisierter Signale (30, 31) aus den Speichermitteln und zur Erzeugung eines Bildes digitalisierter Muster des Beleges, von dem die Signale gebildet werden,
- manuell bedienbare Kontrollmittel (35) zum Auswählen einer Anzahl Stellen in dem Belegbild, um damit ausgewählte Segmente digitaler Muster zu bezeichnen und zum Anfügen einer Adressinformation (22, 23, 24) zur Kontrolle der späteren Anordnung dieser Segmente, und
- einen Grossspeicher (37, 38) zur Aufnahme und zum Speichern dieser Segmente in digitalisierter Form und der Adressinformation.

2. Vorrichtung nach Anspruch 1, dadurch gekennzeichnet, dass der durch die Aufdruckmittel (18) aufgedruckte Zeichensatz gleichzeitig aufgedruckte Zeichen-Teilsätze (20, 22, 23, 24) in maschinen- und menschenlesbarer Form mit etwa derselben Information aufweisen.

3. Virrichtung nach Anspruch 2, dadurch gekennzeichnet, dass das bestimmte Feld (22, 23) ein Rand jedes Dokumentes (10) ist.

4. Vorrichtung nach Anspruch 1, gekennzeichnet durch

- Mittel (40) zum Identifizieren von für nicht bekannte und unbestimmte digitalisierte Muster typischen Signalen mit einem unterscheidenden Materialien-Code-Zeichen in Übereinstimmung mit solchen Code-Signalen in den Speichermitteln,
- Mittel (42) zum Abrufen von Code-Signalgruppen mit den Markier-Code-Zeichen und Darstellung von Gruppen von Code-Signalen, die ein nicht erkanntes Signal enthalten, auf einem Bildschirm,
- Mittel (31) zum Darstellen des nicht erkannten digitalisierten Musters gleichzeitig mit den Symbolen der Code-Signal-Gruppen auf dem Bildschirm für menschliche Nachprüfung und
- Mittel zur manuellen Eingabe eines Symbol-Code-Zeichens um das Markier-Code-Zeichen und die, die nicht erkannten oder unbestimmten Symbole darstellenden Signale zu ersetzen.

5. Vorrichtung nach Anspruch 1, dadurch gekennzeichnet, dass der Grossspeicher (38) Videoplatten zur Aufnahme und Speicherung aufweist.

6. Vorrichtung zur Speicherung von Auswahlinformation aus Quellenbelegen durch Mittel des Patentanspruchs 1.

7. Vorrichtung nach Anspruch 1 oder 6, gekennzeichnet durch

- Mittel zum Abrufen digitalisierter Signale aus den Speichermitteln (16) und zum Umsetzen derselben in Signale eines Maschinen-Codes (30, 31) und
- Mittel zum Speichern (37, 38) der Code-Signale.

8. Vorrichtung nach Anspruch 1 oder 4, dadurch gekennzeichnet, dass das manuell betätigbare Kontrollmittel (35) ein manipulierbares Bedienungsorgan zum Anordnen von Zeigern an diesen Stellen ist.

9. Vorrichtung nach Anspruch 1 oder 4, dadurch gekennzeichnet, dass das manuell betätigbare Kontrollmittel ein Lichtstift ist, und der Bildschirm auf den Lichtstift ansprechenden Mittel zum Anbringen eines Identifizierelementes an den Kontaktstellen des Stiftes aufweist.

10. Verfahren zum Eingeben und Verarbeiten von Daten aus Quellenbelegen einer Vorrichtung nach einem der Ansprüche 1 bis 9, bei welchem jeder Quellenbeleg abgetastet und Signale gebildet werden, die typisch für von Zeichen- und Graphik-Abbildungen abgeleiteten digitalisierten Muster sind, sowie die für die Signale typischen digitalisierten Muster zeitweilig abgespeichert werden, gekennzeichnet durch
- Auswählen von Segmenten der gespeicherten Signale für weitere Verarbeitung,
- Umwandlung der für die digitalisierten Zeichenmuster typischen Signale nur in den ausgewählten Segmenten in Maschinencode,
- Darstellen der digitalisierten Muster aus dem Speicher für jedes nicht erfolgreich in Maschinencode umgewandelte Zeichen,
- manuelles Eingeben eines Codes für das digitalisierte Muster, und Speichern des Maschinencode- und digitalisierten Muster-Signals für späteren Gebrauch.

11. Verfahren nach Anspruch 10, gekennzeichnet durch
- Anfügen eines Signalsatzes an digitalisierte Mustersignalsätze, der typisch für ein aus einem Lexikon ausgewähltes Kennwort ist, durch das für die digitalisierten Mustersignalsätze nachträglich Zugriff besteht.

12. Verfahren nach Anspruch 10, gekennzeichnet durch digitalisierte Zeichenmuster, die vor oder nach jedem nicht umgesetzten Zeichen erscheinen.

13. Verfahren nach Anspruch 10, gekennzeichnet durch
- Anfügen eines Signalsatzes an die Maschinen-Code-Signale, welcher typisch für ein in Übereinstimmung mit dem Lexikon ausgewählten Kennwort ist.

14. Verfahren nach Anspruch 10 oder 11, dadurch gekennzeichnet, dass das Auswählen das manuelle Setzen eines Zeigers am Anfang und Ende jedes umzusetzenden Segmentes einschliesst.

15. Verfahren nach Anspruch 10 oder 11, dadurch gekennzeichnet, dass das Auswählen die Befehlsgebung an einen Prozessor zum Auswählen von Segmenten aus ausgewählten Gebieten der Quellenbelege umfasst.

16. Verfahren nach Anspruch 10, gekennzeichnet durch den vorausgehenden Schritt des Druckens eines Zeichensatzes in einer bestimmten Zone auf jedem Beleg, der das Dokument in menschen- und maschinenlesbarer Schrift identifiziert.

17. Verfahren zum Verarbeiten von Quellenbelegen und zum Eingeben von ausgewählten Daten in ein Speicher- und Wiederauffindungssystem, gekennzeichnet durch
- manuelles Markieren jedes Quellenbeleges mit maschinenlesbaren Unterscheidungsmarkierungen, die ein oder mehr abzuspeichern bestimmte Datensegmente bezeichnen,
- Abtasten jedes Quellenbeleges und Bilden von Signalen, welche für digitalisierte, von Zeichen und Graphikbildern in den ausgewählten Segmenten abgeleitete Muster typisch sind,
- zeitweiliges Speichern der für die digitalisierten Muster typischen Signale,
- Umsetzen von für digitalisierte Zeichenmuster typische Signale in einen Maschinen-Code,
- Darstellen der digitalisierten Muster aus dem Signalspeicher für jedes nicht erfolgreiche Maschinen-Code umgesetzte Zeichen,
- manuelles Eintragen eines Code-Zeichens für das digitalisierte Muster und
- Speichern des Maschinen-Codes und des digitalisierten Mustersignals für nachträglichen Gebrauch.

18. Verfahren nach Anspruch 17, dadurch gekennzeichnet, dass die Darstellung von umgesetzten Zeichen links und rechts des nicht umgesetzten oder unbestimmten Zeichens ist.

19. Verfahren nach Anspruch 11 oder 14, dadurch gekennzeichnet, dass das manuelle Setzen eines Zeigers die Anwendung eines Lichtstiftes zur Darstellung einschliesst, um die gewünschten Zeigerlagen festzustellen.

**Claims**

1. Installation for the collection of data from a plurality or source documents in which means are provided for the successive receipt of documents (10), for optically sensing each document (11) and for forming a series of digitised signals (12) representative of digital patterns, which substantially approximate the pattern on each document, with which an image of each document can be produced, characterised by
- means for printing a set of indicia (18) in a given field (20) of each document to identify the document and to generate electrical signals representative of these indicia,
- storage means (16) for storing the series of digitised signals with the signals typical of these sets of indicia, ·
- means for calling up groups of digitised signals (30, 31) from the storage means and for generating an image of the digitised pattern of the document, from which the signals are formed,
- manually operable control means (35) to select a number of places in the document image in order to denote thereby selected segments of the digital pattern and to attach address information (22, 23, 24) for the control of the later arrangement of these segments, and
- a large capacity store (37, 38) for receipt and storage of these segments in digitised form and of the address information.

2. Installation according to Claim 1, characterised in that the indicia set printed via the print means (18) has simultaneously printed indicia part sets (20, 22, 23, 24) in machine and human readable form with substantially the same information.

3. Installation according to Claim 2, characterised in that the given field (22, 23) is a margin of each document (10).

4. Installation according to Claim 1, characterised by
- means (40) for identifying from unknown and undetermined digitalised patterns, typical signals with a differentiating material code indicium in agreement with such code signals in the storage means,
- means (42) for calling up code signal groups with the marker code indicia and illustration of groups of code signals, which contain a non-identified signal, on a screen;
- means (31) for illustrating the not identified digitised pattern simultaneously with the symbols of the code signal group on the screen for human checking and
- means for manual entry of a symbol code indicium in order to replace the marker code indicium and the signals representing the not recognised or undetermined symbols.

5. Installation according to Claim 1, characterised in that the large capacity store (38) has video discs for receipt and storage.

6. Installation for the storage of selected information from source documents by means of Patent Claim 1.

7. Installation according to Claim 1 or 6, characterised by
- means for calling up digitised signals from the storage means (16) and for converting the same into signals of a machine code (30, 31) and
- means for storage (37, 38) of the code signals.

8. Installation according to Claim 1 or 4, characterised in that the manually operatable control means (35) is a manipulatable control element for the arrangement of pointers at these places.

9. Installation according to Claim 1 or 4, characterised in that the manually operatable control means is a light pen and the screen has means responding to the light pen for the application of an identification element at the contact places of the pen.

10. Process for inserting and editing data from source documents of an installation according to one of Claims 1 to 9, in which each source document is sensed and signals are formed which are typical of digitised patterns derived from indicia and graphic representations, as well as the digitised patterns typical of the signals being stored over time, characterised by
- selection of segments of the stored signals for further processing,
- transformation of the signals typical of the digitised indicia pattern only in the selected segments into machine code,
- representation of the digitised pattern from the store for each indicium not sufficiently converted into machine code,

- manual insertion of a code for the digitised pattern and storage of the machine code and digitised pattern signal for later use.

11. Process according to Claim 10, characterised by
- attaching a signal set to digitised pattern signal sets which typically is a catchword selected from a lexicon and by which subsequent capture is effected for the digitised pattern signal set.

12. Process according to Claim 10, characterised by digitised indicia pattern which appear before or after each non-converted indicium.

13. Process according to Claim 10, characterised by
- pulling up a signal set to the machine code signals which is typical for a catchword selected in agreement with the lexicon.

14. Process according to Claim 10 or 11, characterised in that the selection includes the manual setting of a pointer at the start and end of each segment to be converted.

15. Process according to claim 10 or 11, characterised in that the selection comprises giving commands to a processor to select from segments from selected areas of the source document.

16. Process according to Claim 10, characterised by the preceding step of printing an indicia set in a given zone on each document which identifies the document in human and machine readable script.

17. Process for processing source documents and for introducing selected data into a storage and retrieval system characterised by
- manual marking of each source document with machine readable differentiation markings which denote one or more given data segments to be stored,
- sensing each source document and forming signals which are representative of digitised patterns derived from indicia and graphic images in the selected segments,
- temporary storage of the signals typical of the digitised pattern,
- conversion of the signals typical of the digitised indicia pattern into a machine code,
- representation of the digitised pattern from the signal store for each indicium not sufficiently converted to machine code,
- manual entry of a code indicium for the digitised pattern and
- storage of the machine code and the digitised pattern signal for subsequent use.

18. Process according to Claim 17, characterised in that the illustration of converted indicia is to the left and right of the unconverted or undetermined indicia.

19. Process according to Claim 11 or 14, characterised in that the manual setting of a pointer includes the use of a light pen for illustration in order to fix the desired pointer position.

**Revendications**

1. Dispositif de collecte de données provenant d'un certain nombre de documents originaux, dans lequel des moyens de réception successive de documents (10), de lecture optique de chaque document (11) et de formation de séries de signaux (12) numérisés, caractéristiques de formes numériques sont prévus, lesquels détectent en grande partie les formes apparaissant sur chaque document, par lesquelles une image de chaque document peut être produite, caractérisé par

- des moyens d'impression d'un bloc de caractères (18) dans une plage (20) définie de chaque document, pour identifier le document et pour produire des signaux électriques, caractéristiques de ces caractères,
- des moyens de mémorisation (16) pour la mise en mémoire des séries de signaux numérisés avec les signaux caractéristiques de ce bloc de caractères,
- des moyens d'appel de groupes de signaux numérisés (30, 31) à partir des moyens de mémorisation et de production d'une image de formes numérisées du document dont sont formés les signaux,
- des moyens de contrôle (35) manuels pour la sélection d'un certain nombre d'emplacements dans l'image du document, afin de référencer les segments sélectionnés des formes numériques et d'ajouter une information d'adressage (22, 23, 24) pour le contrôle de la disposition ultérieure de ces segments, et
- une mémoire de grande capacité (37, 38) pour l'enregistrement et la mise en mémoire de ces segments sous une forme numérisée ainsi que l'information d'adressage.

2. Dispositif selon la revendication 1, caractérisé en ce que le bloc de caractères imprimé par les moyens d'impression (18) présente en même temps des blocs partiels de caractères (20, 22, 23, 24) imprimés sous une forme lisible par la machine et par l'homme portant à peu près la même information.

3. Dispositif selon la revendication 2, caractérisé en ce que la plage (22, 23) définie est une marge de document (10).

4. Dispositif selon la revendication 1, caractérisé par

- des moyens (40) d'identification de signaux caractéristiques de formes numérisées non connues et indéfinies avec un caractère de code de matériel distinctif, en concordance avec les signaux de code des moyens de mémorisation,
- des moyens (42) d'appel de groupes de signaux de code avec les caractères de codes de marquage et représentation de groupes de signaux de code qui contiennent un signal non reconnu, sur un écran,
- des moyens (31) de représentation de la forme numérisée non reconnue en même temps que les symboles des groupes de signaux de codes sur l'écran, pour la vérification humaine et
- des moyens de saisie manuelle d'un caractère de code de symbole pour remplacer le caractère de code de marquage et les signaux représentant les symboles non reconnus ou indéfinis.

5. Dispositif selon la revendication 1, caractérisé en ce que la mémoire de grande capacité (38) comporte des disques vidéo d'enregistrement et de mise en mémoire.

6. Dispositif de mise en mémoire d'informations sélectionnées dans des documents originaux, par les moyens de la revendication 1.

7. Dispositif selon la revendication 1 ou 6, caractérisé par

- des moyens d'appel de signaux numérisés à partir des moyens de mémorisation (16) et de conversion de ceux-ci en signaux d'un code machine (30, 31) et
- des moyens de mémorisation (37, 38) des signaux de codes.

8. Dispositif selon la revendication 1 ou 4, caractérisé en ce que le moyen de contrôle (35) à commande manuelle est un organe de commande à manipuler pour disposer des curseurs en ces emplacements.

9. Dispositif selon la revendication 1 ou 4, caractérisé en ce que le moyen de contrôle à commande manuelle est un photostyle, et en ce que l'écran comporte des moyens réagissant au photostyle pour appliquer un élément d'identification aux points de contact du photostyle.

10. Procédé de saisie et de traitement de données provenant de documents originaux d'un dispositif selon l'une des revendications 1 à 9, dans lequel chaque document original est lu et des signaux formés qui sont caractéristiques des formes numérisées dérivées de représentations de caractères et de graphiques et les formes numérisées caractéristiques des signaux sont mises en mémoire temporairement, caractérisé par la

- sélection de segments des signaux mis en mémoire, pour un traitement ultérieur,
- conversion des signaux caractéristiques des caractères numérisés uniquement dans les segments sélectionnés, en code machine,
- représentation des formes numérisées provenant de la mémoire pour chaque caractère non converti avec succès en code machine,
- saisie manuelle d'un code pour la forme numérisée, et mise en mémoire du signal de code machine et du signal de forme numérisée pour usage ultérieur.

11. Procédé selon la revendication 10, caractérisé par

- l'ajout d'un bloc de signaux à des blocs de signaux de formes numérisées qui est caractéristique d'un mot de passe sélectionné dans un lexique, par lequel on peut avoir ultérieurement accès aux blocs de signaux de formes numérisées.

12. Procédé selon la revendication 10, caractérisé par des caractères numérisés qui apparaissent avant ou après chaque caractère non converti.

13. Procédé selon la revendication 10, caractérisé par ajout d'un bloc de signaux aux signaux de code machine qui est caractéristique d'un mot de passe sélectionné en concordance avec le lexique.

14. Procédé selon la revendication 10 ou 11, caractérisé en ce que la sélection englobe la mise en place manuelle d'un curseur au début et la fin de chaque segment à convertir.

15. Procédé selon la revendication 10 ou 11, caractérisé en ce que la sélection inclut l'envoi de commandes à un processeur pour sélectionner des segments de domaines sélectionnés des documents originaux.

16. Procédé selon la revendication 10, caractérisé par une étape préalable d'impression d'un bloc de caractères dans une zone déterminée de chaque document qui identifie le document dans une écriture lisible par l'homme et par la machine.

17. Procédé de traitement de documents originaux et de saisie de données sélectionnées dans un système à mémoire et dans un système de recherche, caractérisé par
- un marquage manuel de chaque document original au moyen de marques distinctives lisibles par la machine qui référencient un ou plusieurs segments de données définis à mettre en mémoire,
- la lecture de chaque document original et la formation de signaux qui sont caractéristiques de formes numérisées, dérivées de caractères et d'images graphiques dans les segments sélectionnés,
- la mise en mémoire temporaire des signaux caractéristiques des formes numérisées,
- la conversion de signaux caractéristiques de formes de caractères numérisées en un code machine,
- la représentation des formes numérisées provenant de la mémoire de signaux pour chaque caractère dont la conversion en code machine n'a pas réussi,
- la saisie manuelle d'un caractère de code pour la forme numérisée et
- la mise en mémoire du code machine et du signal de forme numérisée pour usage ultérieur.

18. Procédé selon la revendication 16, caractérisé en ce que la représentation de caractères convertis se présente à gauche et à droite du caractère non converti ou indéfini.

19. Procédé selon la revendication 11 ou 14, caractérisé en ce que la mise en place manuelle d'un curseur inclut l'application d'un photostyle de représentation afin de fixer les positions souhaitées pour le curseur.

FIG. 1

FIG. 2

FIG. 5

FIG. 3

FIG. 4